Europäisches Patentamt

European Patent Office

Office européen des brevets

(19)

(11) Veröffentlichungsnummer: **0 188 243**
A2

(12) # EUROPÄISCHE PATENTANMELDUNG

(21) Anmeldenummer: 86100274.9

(22) Anmeldetag: 10.01.86

(51) Int. Cl.⁴: **B 60 C 17/04**

(30) Priorität: 15.01.85 DE 3501116

(43) Veröffentlichungstag der Anmeldung:
23.07.86 Patentblatt 86/30

(84) Benannte Vertragsstaaten:
AT BE CH DE FR GB IT LI LU NL SE

(71) Anmelder: Continental Gummi-Werke
Aktiengesellschaft
Königsworther Platz 1
D-3000 Hannover 1(DE)

(72) Erfinder: Gerloff, Klaus
Tischbeinstrasse 5
D-3004 Isernhagen(DE)

(72) Erfinder: Ehlert, Dieter
Im Brande 4
D-3007 Gehrden(DE)

(72) Erfinder: von der Wall, Klaus
Blumenweg 4
D-3051 Wölpinghausen(DE)

(54) Fahrzeugrad.

(57) Die Erfindung bezieht sich auf ein luftbereiftes Fahrzeugrad, das für einen Notlauf geeignet ist, mit einem im wesentlichen aus Gummi oder gummiähnlichen Kunststoffen bestehenden Reifen, der eine Karkasse aufweist, die in den Wülsten durch Umschlingen von Wulstkernen verankert ist, der auf der Innenseite mit einer luftundurchlässigen Schicht (Innenseele) versehen ist und der eine Gürtelverstärkung aufweisen kann, weiterhin mit einer starren Felge und mit einem Notlaufelement, das vom Felgenkranz oder von einem separaten Stützteil gebildet wird und auf dem sich der Reifen mit seiner Innenwand bei einem Notlauf abstützt. Um einen Notlauf über längere Zeit ohne Schädigung der Innenseele des Reifens zu gewährleisten, wird vorgeschlagen, daß sich auf der radial äußeren Seite des Notlaufelements zumindest ein Reibband befindet, das nach radial außen hin alle übrigen Teile der Felge überragt und das drehbar auf seiner Unterlage gelagert ist.

FIG.1

## Fahrzeugrad

Die Erfindung betrifft ein luftbereiftes Fahrzeugrad, das für einen Notlauf geeignet ist, mit einem im wesentlichen aus Gummi oder gummiähnlichen Kunststoffen bestehenden Reifen, der eine Karkasse aufweist, die in den Wülsten durch Umschlingen von Wulstkernen verankert ist, der auf der Innenseite mit einer luftundurchlässigen Schicht (Innenseele) versehen ist und der eine Gürtelverstärkung aufweisen kann, weiterhin mit einer starren Felge und mit einem Notlaufelement, das vom Felgenkranz oder von einem separaten Stützteil gebildet wird und auf dem sich der Reifen bei einem Notlauf abstützt.

Ein solches Fahrzeugrad wird z.B. in der DE-OS 32 46 086 beschrieben. Bei dem bekannten Fahrzeugrad dient ein Gleitmittelbelag, der sich auf einer Stützfläche des Felgenkranzes befindet, dazu, die Reifeninnenwand bei einem Notlauf ohne allzu große Wärmeentwicklung abzustützen. Es hat sich jedoch gezeigt, daß bei einem längeren Fahren mit einem defekten Reifen immer noch eine zu hohe Wärmeentwicklung auftritt, die häufig eine vorzeitige Schädigung oder Zerstörung der Reifeninnenwand zur Folge hat. Dies ist zum Teil damit zu begründen, daß sich beim Notlauf das Gleitmittel seitlich wegdrückt.

Es sind weiterhin Fahrzeugräder für einen Notlauf vorgeschlagen worden, bei denen ein Stützelement drehbar auf der Felge angeordnet ist. Da diese Stützelemente beim Notlauf die gesamte Last aufnehmen müssen, fallen sie sehr klobig und schwer aus, so daß sich häufig unüberwindliche Gewichts- und Montageprobleme ergeben. Außerdem bedarf es sehr komplizierter Mittel, diese schweren Stützelemente rotierbar auf der Felge zu lagern.

Der Erfindung liegt deshalb die Aufgabe zugrunde, ein für einen Notlauf geeignetes Fahrzeugrad zu entwickeln, bei dem die Innenseele des Reifens einen längeren Notlauf ohne Schädigung übersteht und bei dem auf der anderen Seite keine schweren Stützelemente drehbar auf der Felge gelagert sein müssen.

Diese Aufgabe wird erfindungsgemäß dadurch gelöst, daß sich auf der radial äußeren Seite des Notlaufelements zumindest ein Reibband befindet, das nach radial außen hin alle übrigen Teile der Felge überragt und das drehbar auf seiner Unterlage gelagert ist.

Die Erfindung bietet zum einen den großen Vorteil, daß bei einem Notlauf keine Relativbewegung zwischen der Innenseele des Reifens und der Unterlage auf der Felge, auf der sich der Reifen abstützt, stattfindet, weil das als Unterlage dienende Reibband aufgrund der großen Reibung vollständig vom Reifen mitgenommen wird. Die Relativbewegung findet nunmehr zwischen dem Reibband und der Felge bzw. dem Stützelement statt, wo die Wärmeentwicklung aufgrund des gegebenenfalls vorhandenen Gleitmittels minimal ist und wo darüber hinaus die Wärme bestens über das Metall der Felge abgeleitet wird.

Zum anderen ergibt sich bei der Erfindung der Vorteil, daß das Reibband sehr dünn ausgebildet sein kann, da es keine große Eigensteifigkeit aufweisen muß, weil die Last von der darunter liegenden stabilen Felge aufgenommen wird. Weiterhin ergibt sich bei dem dünnen Reibband im Vergleich mit einem voluminösen Stützelement eine sehr einfache Montagemöglichkeit.

Vorteilhafte Ausgestaltungen der Erfindung sind den Unteransprüchen zu entnehmen.

Nachfolgend werden mehrere Ausführungsbeispiele der Erfindung anhand einer Zeichnung beschrieben. Es zeigt

Fig. 1 ein Fahrzeugrad mit einer einteiligen Felge und mit einem einzigen Reibband auf dem Felgenkranz in einem radialen Teilschnitt,

Fig. 2 einen Ausschnitt des Fahrzeugrads gemäß Fig. 1 im Bereich II,

Fig. 3 ein Reibband mit Führungsstegen in einem radialen Teilschnitt,

Fig. 4 ein Fahrzeugrad mit einer Tiefbettfelge und mit je einem Reibband im Schulterbereich in einem radialen Teilschnitt,

Fig. 5 einen vergrößerten Ausschnitt des Fahrzeugrads der Fig. 4 im Bereich V,

Fig. 6 ein weiteres Fahrzeugrad mit einer Tiefbettfelge und mit je einem Reibband im Schulterbereich,

Fig. 7 einen Ausschnitt des Fahrzeugrads der Fig. 6 im Bereich VII,

Fig. 8 ein Fahrzeugrad mit einer einteiligen Hochbettfelge und mit zwei Reibbändern in einem radialen Teilschnitt,

Fig. 9 ein Fahrzeugrad mit einem Stützteil auf der Felge und mit einem Reibband auf dem Stützteil,

Fig. 10 ein Stützteil gemäß Fig. 9, das mit einem Reibband in Form einer PTFE-Manschette versehen ist,

Fig. 11 ein Fahrzeugrad in Notlaufstellung mit einer einteiligen Felge mit einem Reibband in Form einer PTFE-Manschette auf dem Felgenkranz in einem radialen Teilschnitt.

Fig. 12 einen Schnitt durch das Rad der Fig. 11 in der Ebene
XII - XII.

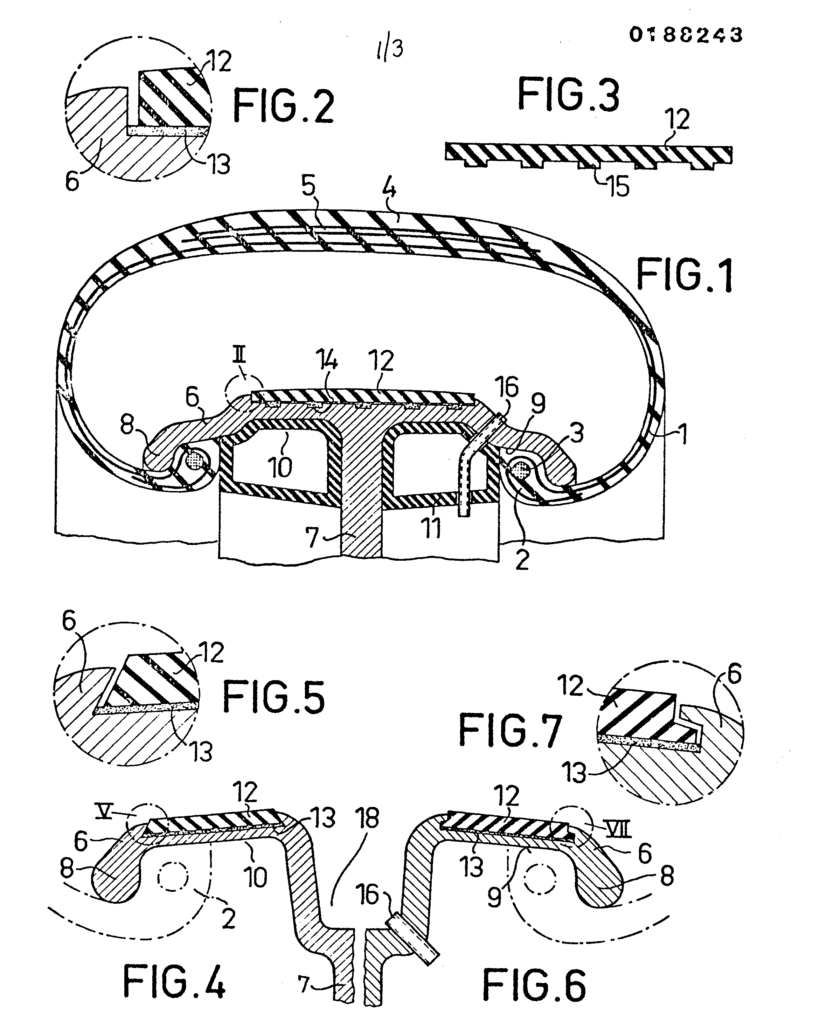

Der beim Rad gemäß Fig. 1 verwendete Fahrzeugluftreifen, der im wesentlichen aus Gummi oder gummiähnlichen Stoffen besteht, weist eine Radialkarkasse 1 auf, die in den Wülsten 2 durch Umschlingen von zug- und
druckfesten Wulstkernen 3 verankert ist. Unterhalb des Laufstreifens 4
zwischen diesem und der Karkasse 1 befindet sich ein in Umfangsrichtung
zugfester, aus zwei oder mehreren Cordgewebelagen bestehender Gürtel 5,
der die Seitenstabilisierung des Reifenkörpers bewirkt.

Die bevorzugt metallische Felge besteht im wesentlichen aus einem
Felgenkranz 6, der in bekannter Weise an einer Schüssel 7 befestigt
ist. Der Felgenkranz 6 dient zur Halterung der Reifenwülste 2 und
zur Abstützung des Reifens bei einem Notlauf, d.h. im Defektfall.
Der Felgenkranz 6 der vorwiegend einteiligen Felge weist im Querschnitt
gesehen seitlich außen je ein Felgenhorn 8 auf, das sich im wesentlichen nach radial innen erstreckt. Am inneren Umfang des Felgenkranzes 6 liegt in axialer Richtung innen neben jedem Felgenhorn 8
eine Sitzfläche 9 für den Reifen. Axial innen befindet sich je ein
sogenanntes Hochbett 10, das der Reifenmontage dient und das mit einem
Füllring 11 aus Gummi oder einem anderen geeigneten Material ausgefüllt sein kann.

Auf der radial äußeren Seite ist der Felgenkranz 6 in einem überaus
breiten Mittenbereich mit einer nahezu zylinderförmigen Mantelfläche
versehen, die in Querrichtung gerade oder leicht gewölbt verlaufen
kann. Dieser Bereich des Felgenkranzes 6 dient als Stützelement für
den Reifen bei einem Notlauf.

In diesem Bereich ist gemäß Fig. 1 ein verhältnismäßig dünnes, ballig
ausgebildetes Reibband 12 montiert, das seitlich von kleinen Erhebungen des Felgenkranzes 6 geführt wird. Das Reibband 12 kann aus
Gummi bestehen, wobei es zweckmäßig ist, zur Erhöhung der Festigkeit
bevorzugt in Umfangsrichtung angeordnete Verstärkungseinlagen einzubetten. Bei Bedarf kann das Reibband 12 aber auch aus einem geeigneten Kunststoff oder Metall bestehen. Damit das Reibband 12 sich bei einem Notlauf leicht auf dem Felgenkranz 6 drehen kann, befindet sich zwischen ihm und dem Felgenkranz 6 ein Gleitmittel 13. Überwiegend in Umfangsrichtung verlaufende Nuten 14, die zickzack- oder wellenförmig ausgebildet sein können, dienen zum besseren Halten des Gleitmittels 13.

Im vergrößerten Ausschnitt gemäß Fig. 2 ist deutlich zu erkennen, daß es wesentlich darauf ankommt, daß das Reibband 12 die seitlichen Teile des Felgenkranzes 6 in radialer Richtung überragt, damit bei einem Notlauf die Reifeninnenwand sich auf dem Reibband und nicht auf den seitlichen Teilen des Felgenkranzes abstützt. Für das radiale Überragen genügen 1 bis 3 mm, während die mittlere Dicke des Bandes 12 zwei bis 8 mm betragen kann.

Fig. 3 zeigt eine weitere Ausführungsform eines Reibbandes, die sich dadurch auszeichnet, daß Führungsstege 15 vorhanden sind, die in Umfangsnuten 14 eingreifen können.

In Fig. 4 ist ein Teil eines Fahrzeugrads mit einer Tiefbettfelge dargestellt, die in manchen Fällen zur besseren Reifenmontage bevorzugt wird. Die Reifenwülste 2 sind wiederum am radial inneren Umfang der Felge neben radial sich nach innen erstreckenden Felgenhörnern 8 angeordnet, während ein schwach angedeutetes Hochbett 10 der Montage dient. Radial außen befindet sich im Schulterbereich des Felgenkranzes 6 neben einem Tiefbett 18 je ein Reibband 12, das in Verbindung mit dem Felgenkranz 6 wiederum als Stützelement für einen Notlauf dient. Zur Vermeidung der Reibung bei der Drehung ist ein geeignetes Gleitmittel 13 vorgesehen.

Fig. 5 stellt einen vergrößerten Ausschnitt des Bereichs V der Fig. 4 dar. Man erkennt, daß das Reibband 12 seitlich in einen hinterschnittenen Raum des Felgenkranzes 6 hineinreicht.

Das Fahrzeugrad gemäß Fig. 6 unterscheidet sich von dem der Fig. 4 lediglich durch die seitliche Führung des Reibbandes 12, wie man sie deutlich der Fig. 7 entnehmen kann. Die seitlichen Ränder des Reibbandes 12 sind in diesem Beispiel nicht gerade, sondern gekrümmt ausgebildet.

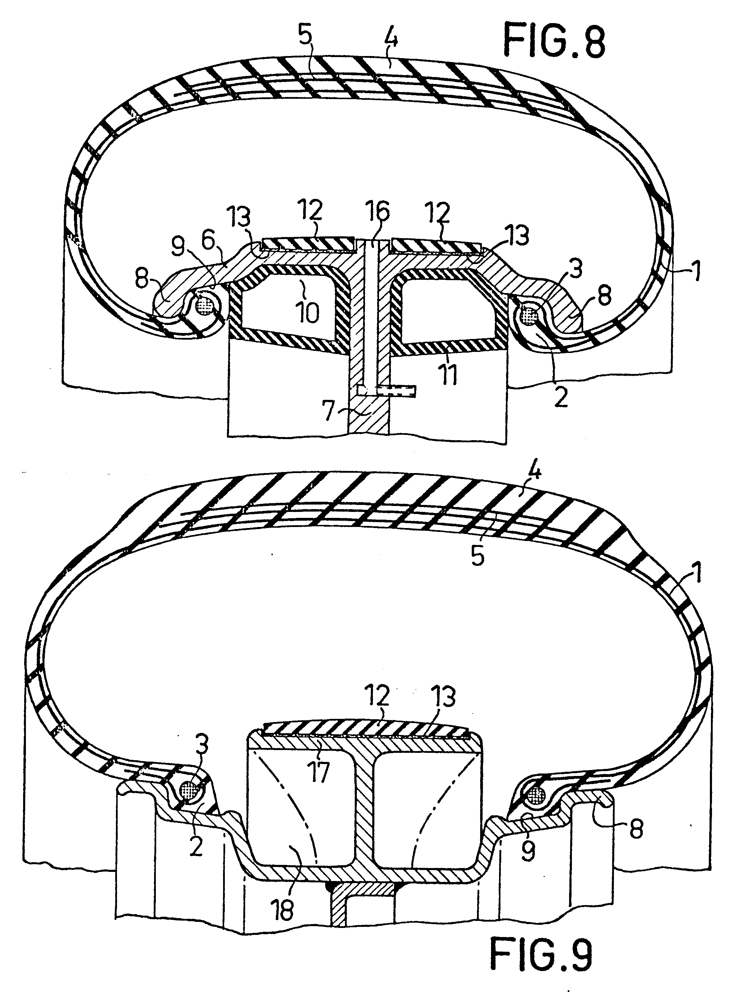

Fig. 8 zeigt ebenfalls ein Fahrzeugrad mit einer einteiligen Felge, bei dem die Reifenwülste am radial inneren Umfang des Felgenkranzes 6 angeordnet sind und bei dem ein Schulterhochbett 10 zur Reifenmontage dient. Im Gegensatz zum Rad der Fig. 1 befinden sich jedoch radial außen am Felgenkranz 6 zwei mit axialem Abstand angeordnete Reibbänder 12. Der Zwischenraum zwischen ihnen kann als Ventilzuführung 16 dienen. Ansonsten gelten die gleichen Überlegungen, wie sie bereits bei der Beschreibung der Fig. 1 dargestellt worden sind.

Das Beispiel der Fig. 9 unterscheidet sich von den vorstehend beschriebenen vor allem dadurch, daß der Reifen mit seinen Wülsten am radial äußeren Umfang einer Felge angeordnet ist und daß das Notlaufelement nicht vom Felgenkranz, sondern von einem Stützteil 17 gebildet wird. Zwei kleine Tiefbetten 18 dienen der Reifenmontage für den Fall, daß das Stützteil 17 bereits am Felgenkranz montiert oder sogar angeschweißt ist. Radial außen vom Stützteil 17 befindet sich ein Reibband 12, das unter Verwendung eines Gleitmittels 13 drehbar und gegen seitliche Verschiebungen gesichert auf dem Stützteil 17 gelagert ist. Bei einem Notlauf wird in diesem Fall die Last nicht vom Felgenkranz, sondern vom Stützteil 17 übernommen. Auch bei diesem Beispiel findet bei einem Notlauf keine Relativbewegung zwischen der Innenseele des Reifens und dem Reibband 12 statt, so daß eine Wärmeentwicklung allenfalls zwischen dem Reibband 12 und dem Stützteil 17 gegeben ist, die im Fall eines metallischen Stützteils 17 zur Felge hin abgeleitet werden kann.

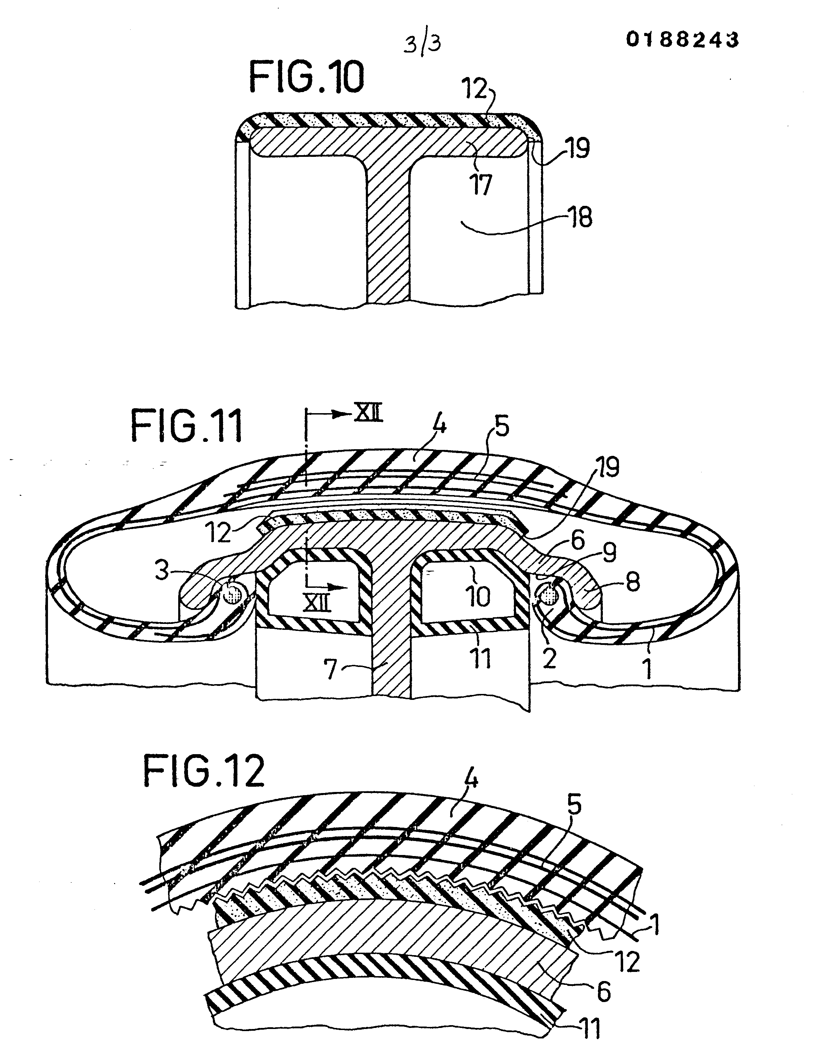

Beim Fahrzeugrad der Fig. 9 kann auch ein Stützteil 17 gemäß Fig. 10 zum Einsatz kommen, das sich durch ein Reibband 12 in Form einer das Stützteil 17 seitlich teilweise umfassenden (Führungsstege 19) Gleitmanschette auszeichnet, die bevorzugt aus Polytetrafluoräthylen besteht, jedoch auch aus einem anderen Material hergestellt sein kann. Bei der Verwendung von PTFE erübrigt sich ein zusätzliches Gleitmittel.

Fig. 11 zeigt ein Fahrzeugrad in einer Notlaufstellung. Das Rad ist im wesentlichen wie in Fig. 1 aufgebaut. Der entscheidende Unterschied besteht darin, daß das Reibband 12 als Gleitmanschette ausgebildet ist, die nicht teilweise in den Felgenkranz 6 eingelassen ist, sondern auf diesem aufliegt und seinen radial äußeren Teil zur besseren Führung seitlich nach radial innen hin umschließt, so daß die Ränder des bevorzugt aus PTFE bestehenden Reibbandes 12 seitliche Führungsstege 19 bilden.

Damit bei einem Notlauf ein Schlupf zwischen Reifen und Reibband 12 noch sicherer unterbunden wird, kann man gemäß Fig. 12 eine Feinprofilierung an der Reifeninnenseele und/oder am Reibband 12 gemäß Fig. 12 vorsehen. Diese Maßnahme kann selbstverständlich auch bei den übrigen dargestellten Beispielen durchgeführt werden. Auch liegt es innerhalb des Erfindungsgedankens, einzelne Elemente der beschriebenen Beispiele untereinander auszutauschen.

Patentansprüche

1. Luftbereiftes Fahrzeugrad, das für einen Notlauf geeignet ist, mit einem im wesentlichen aus Gummi oder gummiähnlichen Kunststoffen bestehenden Reifen, der eine Karkasse aufweist, die in den Wülsten durch Umschlingen von Wulstkernen verankert ist, der auf der Innenseite mit einer luftundurchlässigen Schicht (Innenseele) versehen ist und der eine Gürtelverstärkung aufweisen kann, weiterhin mit einer starren Felge und mit einem Notlaufelement, das vom Felgenkranz oder von einem separaten Stützteil gebildet wird und auf dem sich der Reifen mit seiner Innenwand bei einem Notlauf abstützt, dadurch gekennzeichnet, daß sich auf der radial äußeren Seite des Notlaufelements zumindest ein Reibband (12) befindet, das nach radial außen hin alle übrigen Teile der Felge überragt und das drehbar auf seiner Unterlage gelagert ist.

2. Fahrzeugrad nach Anspruch 1, dadurch gekennzeichnet, daß sich zwischen dem Reibband (12) und der Unterlage ein Gleitmittel (13) befindet.

3. Fahrzeugrad nach Anspruch 1, dadurch gekennzeichnet, daß das Reibband (12) seitlich von Teilen des Felgenkranzes (6) oder des Stützteils (17) geführt wird.

4. Fahrzeugrad nach Anspruch 3, dadurch gekennzeichnet, daß die seitliche Führung des Reibbandes (12) durch Eintauchen seiner Ränder in hinterschnittene Räume des Felgenkranzes (6) oder des Stützteils (17) erfolgt.

5. Fahrzeugrad nach Anspruch 1, dadurch gekennzeichnet, daß das Reibband (12) zusätzlich von Führungsstegen (15) geführt wird, die in Nuten (14) des Felgenkranzes (6) oder des Stützteils (17) eingreifen.

6. Fahrzeugrad nach Anspruch 1, dadurch gekennzeichnet, daß die Dicke des Reibbandes (12) 2 bis 8 mm beträgt und daß das Reibband (12) die übrigen Teile der Felge um 1 bis 3 mm nach radial außen hin überragt.

7. Fahrzeugrad nach Anspruch 1, dadurch gekennzeichnet, daß das Reibband (12) aus Gummi mit eingelagerten Festigkeitsträgern aufgebaut ist.

8. Fahrzeugrad nach Anspruch 1, dadurch gekennzeichnet, daß das Reibband (12) aus Kunststoff oder Metall besteht.

9. Fahrzeugrad nach Anspruch 1, dadurch gekennzeichnet, daß das Reibband (12) sich radial außen auf dem Felgenkranz (6) einer einteiligen Felge befindet, bei der die Reifenwülste (2) am radial inneren Umfang angeordnet sind.

10. Fahrzeugrad nach Anspruch 9, gekennzeichnet durch zwei Reibbänder (12).

11. Fahrzeugrad nach Anspruch 10, dadurch gekennzeichnet, daß sich zwischen den beiden Reibbändern (12) ein Tiefbett (18) befindet.

12. Fahrzeugrad nach Anspruch 1, dadurch gekennzeichnet, daß das Reibband (12) auf einem Stützteil (17) gelagert ist, daß das Stützteil (17) und die Reifenwülste (2) am radial äußeren Umfang einer einteiligen Felge angeordnet sind und daß sich zu beiden Seiten des Stützteils (17) ein Tiefbett (18) befindet.

13. Fahrzeugrad nach Anspruch 1, dadurch gekennzeichnet, daß das Reibband (12) als Gleitmanschette mit seitlichen Führungsstegen (19) ausgebildet ist, die das Notlaufelement (6, 17) seitlich teilweise umfassen, und daß das Reibband (12) bevorzugt aus Polytetrafluoräthylen besteht.

Hannover, den 3. Januar 1985
85-1 P/Sr                    Sr/Fr

0188243

FIG.1 FIG.2 FIG.3 FIG.4 FIG.5 FIG.6 FIG.7

Continental
Gummi-Werke A.G.
Hannover

FIG.8

FIG.9

ntinental
mmi–Werke A.G.
annover

0188243

# FIG.10

# FIG.11

# FIG.12

Continental
Gummi-Werke A.G.
Hannover

EM 3604 (3)